# EUROPÄISCHE PATENTSCHRIFT

(11) **EP 3 775 422 B1**
(45) Veröffentlichungstag und Bekanntmachung des Hinweises auf die Patenterteilung: **02.03.2022**
(21) Anmeldenummer: 19718076.3
(22) Anmeldetag: 04.04.2019
(51) Int. Cl.: E04B 1/86, E04C 2/36, B32B 3/12, E04B 1/74, E04B 2/74

(54) **AKUSTIKPANEEL**
ACOUSTIC PANEL
PANNEAU ACOUSTIQUE

(30) Priorität: 12.04.2018 DE 202018101991 U
(43) Veröffentlichungstag der Anmeldung: 17.02.2021
(73) Patentinhaber: Nimbus Group GmbH, 70469 Stuttgart (DE)
(72) Erfinder: JAHNZ, Michael, 70435 Stuttgart (DE); BRENNENSTUHL, Dietrich, 70193 Stuttgart (DE)
(74) Vertreter: Kohler Schmid Möbus Patentanwälte
(86) Internationale Anmeldenummer: PCT/EP2019/058458
(87) Internationale Veröffentlichungsnummer: WO 2019/197259

(56) Entgegenhaltungen:
- US-A- 4 294 329
- US-A- 4 989 688

## Beschreibung

Die vorliegende Erfindung betrifft ein Akustikpaneel zur Beeinflussung der Akustik in Innenräumen wie Büroräumen, wobei das Akustikpaneel eine Mehrzahl von Schichten aufweist, wobei das Akustikpaneel eine Paneelfläche wie ein Rechteck, ein Kreis, ein Dreieck oder dergleichen definiert, und wobei das Akustikpaneel eine Paneeldicke hat.

Ein Akustikpaneel der oben beschriebenen Art ist unter der Bezeichnung "TP30 System" von der Firma Rosso-Acoustic bekannt ("www.rosso-acoustic.com/Produkte/rossoacoustic-tp30").

Das bekannte Akustikpaneel TP30 weist eine Mehrzahl von Schichten auf, einschließlich einer zentralen inneren Wabenschicht mit einer Wabendicke von etwa 28 mm, und Deckschichten auf gegenüberliegenden Seiten der Wabenschicht, die jeweils aus einem Vlies hergestellt sind und eine Deckschichtdicke von jeweils etwa 1 mm haben. Das Akustikpaneel ist in der Regel mit einem Stoffbezug bezogen.

Ferner sind Akustikpaneele unter der Bezeichnung "CP30" von dem gleichen Hersteller bekannt (www.rosso-acoustic.com/Produkte/rossoacoustic-cp30). Diese beinhalten eine Wabenstruktur aus einem transparenten Kunststoffmaterial, eingefasst durch eine transparente Kante. In dieses Akustikpaneel sind Mikrobohrungen eingebracht ("Mikroperforation"), die eine hohe akustische Wirkung haben. Mit dem Akustikpaneel CP30 kann eine Nachhallzeit reduziert werden. Das Akustikpaneel CP30 wirkt absorbierend und schirmend. US 4 989 688 A offenbart die Merkmale des Oberbegriffs des Anspruchs 1.

Vor diesem Hintergrund ist es eine Aufgabe der Erfindung, ein verbessertes Akustikpaneel anzugeben.

Diese Aufgabe wird durch ein Akustikpaneel mit den Merkmalen des Anspruchs 1 gelöst.

Durch die Maßnahme, das Akustikpaneel mit zwei Wabenschichten auszustatten, zwischen denen eine Mittelschicht angeordnet ist und an deren Außenseiten jeweilige Deckschichten vorgesehen sind, können deutlich verbesserte akustische Eigenschaften erreicht werden, insbesondere auch akustisch schirmende Eigenschaften, was mit dem bisherigen Akustikpaneel TP30 nicht im gleichen Umfange möglich war.

Die Aufgabe wird mit den Merkmalen des Anspruchs 1 gelöst.

Bevorzugte Ausführungsformen finden sich in den Merkmalen der Unteransprüche.

Die Vliesschicht kann insbesondere aus einem Polyester sein.

Das Kunststoffmaterial kann insbesondere insbesondere ein PET-Material (Polyethylenterephthalat) sein.

Der Stoffbezug, mit dem das Akustikpaneel vorteilhafterweise bezogen ist, kann ein formgestrickter Bezug oder ein Wollbezug sein.

Durch die speziellen Verhältnisse der Schichtdicken, Wabendicken etc. werden die verbesserten Akustikeigenschaften in hohem Maße realisiert.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Schnittansicht durch eine Ausführungsform eines erfindungsgemäßen Akustikpaneels;
- Fig. 2: eine schematische perspektivische Ansicht in einer Explosionsdarstellung einer weiteren Ausführungsform eines erfindungsgemäßen Akustikpaneels;
- Fig. 3: eine der Fig. 2 vergleichbare Darstellung eines Akustikpaneels des Standes der Technik;
- Fig. 4: ein Diagramm von Schallabsorptionsgrad über der Frequenz für eine Ausführungsform eines erfindungsgemäßen Akustikpaneels;
- Fig. 5: ein der Fig. 4 vergleichbares Diagramm für ein Akustikpaneel des Standes der Technik;
- Fig. 6: ein Diagramm von Schalldämm-Maß über der Frequenz für eine Ausführungsform eines erfindungsgemäßen Akustikpaneels; und
- Fig. 7: eine der Fig. 6 vergleichbare Darstellung für ein Akustikpaneel des Standes der Technik.

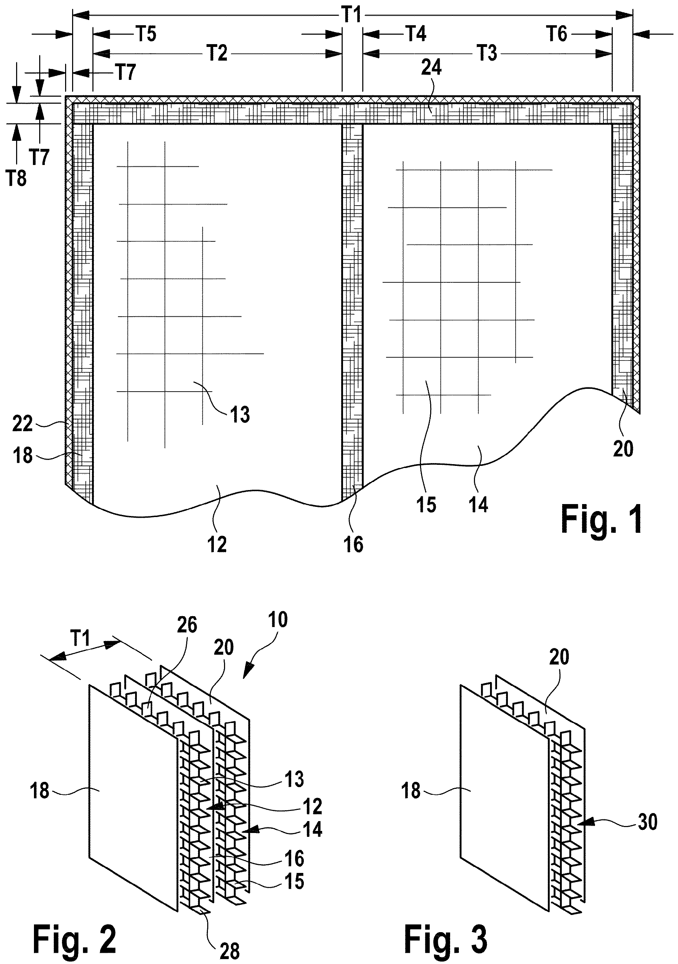

In Fig. 1 ist in schematischer Form ein Querschnitt durch eine Ausführungsform eines Akustikpaneels gezeigt, das generell mit 10 bezeichnet ist.

Das Akustikpaneel kann eine Paneelfläche haben, die typischerweise rechteckförmig ist, jedoch auch andere Formen annehmen kann, wie beispielsweise eine Dreieckform, eine Kreisform etc.

Das Akustikpaneel 10 weist eine Mehrzahl von Schichten auf und weist insgesamt eine Paneeldicke T1 auf.

Die Mehrzahl der Schichten des Akustikpaneels 10 beinhaltet eine erste Wabenschicht 12, die aus einer Vielzahl von Waben 13 zusammengesetzt ist und eine erste Wabendicke T2 hat. Ferner beinhaltet das Akustikpaneel eine zweite Wabenschicht 14, die aus einer Vielzahl von Waben 15 zusammengesetzt ist und eine zweite Wabendicke T3 hat.

Zwischen den Wabenschichten 12, 14 ist eine Mittelschicht angeordnet, die eine Mittelschichtdicke T4 hat.

Auf einer der Mittelschicht 16 gegenüberliegenden Seite der ersten Wabenschicht 12 ist eine erste Deckschicht 18 angeordnet, die eine erste Deckschichtdicke T5 hat.

Auf einer der Mittelschicht 16 gegenüberliegenden Seite der zweiten Wabenschicht 14 ist eine zweite Deckschicht 20 angeordnet, die eine zweite Deckschichtdicke T6 hat.

Das Akustikpaneel 10 kann mit einem Stoffbezug 22 bezogen sein, der eine Bezugdicke T7 hat.

Ferner kann eine Stirnseite des Akustikpaneels 10 eine Stirnseitenschicht 24 beinhalten, die eine Dicke T8 hat. Die Stirnseitenschicht 24 hat vorzugsweise die Funktion einer Stoßkante. Die Stirnseitenschicht 24 ist vorzugsweise aus einem Kunststoffmaterial hergestellt. Das Material der Stirnseitenschicht 24 kann das gleiche Material sein wie jenes von Wandelementen zur Bildung der Waben 13, 15.

Die Waben 13, 15 können auf verschiedene Art und Weisen ausgebildet sein. Vorzugsweise sind die Waben 13, 15 jeweils gebildet durch erste Wandelemente 26, die parallel zu einer Längsseite des Akustikpaneels 10 verlaufen, und zweite Wandelemente 28, die quer hierzu verlaufen, wie es in Fig. 2 gezeigt ist. Die Wandelemente erstrecken sich jeweils in Richtung der Paneeldicke T1.

An ihren zu den jeweiligen anderen Schichten (Mittelschicht bzw. Deckschicht) weisenden Seiten können die Wabenschichten 12, 14 offen sein, können jedoch auch von einer Deckplatte abgedeckt sein. Die Deckplatte und/oder die Mittelschicht kann eine Mikroperforierung aufweisen.

Ein Verhältnis der Mittelschichtdicke T4 zu der ersten Wabendicke T2 und/oder ein Verhältnis der Mittelschichtdicke T4 zu der zweiten Wabendicke T3 und/oder ein Verhältnis der ersten Deckschichtdicke T5 zu der ersten Wabendicke T2 und/oder ein Verhältnis der ersten Deckschichtdicke T5 zu der zweiten Wabendicke T3 und/oder ein Verhältnis der zweiten Deckschichtdicke T6 zu der zweiten Wabendicke T3 und/oder ein Verhältnis der zweiten Deckschichtdicke T6 zu der ersten Wabendicke T2 liegt vorzugsweise in einem Bereich von 0,01 bis 0,3, insbesondere in einem Bereich von 0,03 bis 0,1, und besonders bevorzugt in einem Bereich von 0,06 bis 0,09.

In einer bevorzugten Variante beträgt T1 gleich 30 mm. T2 und T3 sind vorzugsweise identisch und betragen jeweils vorzugsweise 13,5 mm. T4, T5 und T6 sind vorzugsweise identisch und betragen vorzugsweise 1 mm.

Die Wandelemente 26, 28 können aus einem Kunststoffmaterial hergestellt sein. Die Mittelschicht 16 und die Deckschichten 18, 20 können aus einer Vliesschicht hergestellt sein, vorzugsweise aus einer Polyestervliesschicht.

Die Stirnschichtdicke T8 kann beispielsweise in einem Bereich von 0,5 mm bis 3 mm liegen und ist vorzugsweise größer als die Deckschichtdicken T5 bzw. T6.

Das Flächengewicht des Akustikpaneels 10 liegt vorzugsweise in einem Bereich von 1,5 kg/m² bis 2,0 kg/m².

Fig. 3 zeigt eine der Fig. 2 vergleichbare Darstellung des Standes der Technik (System TP30). Dieses beinhaltet eine zentrale Wabenschicht, auf deren Seitenflächen jeweilige Deckschichten 18, 20 aufgebracht sind.

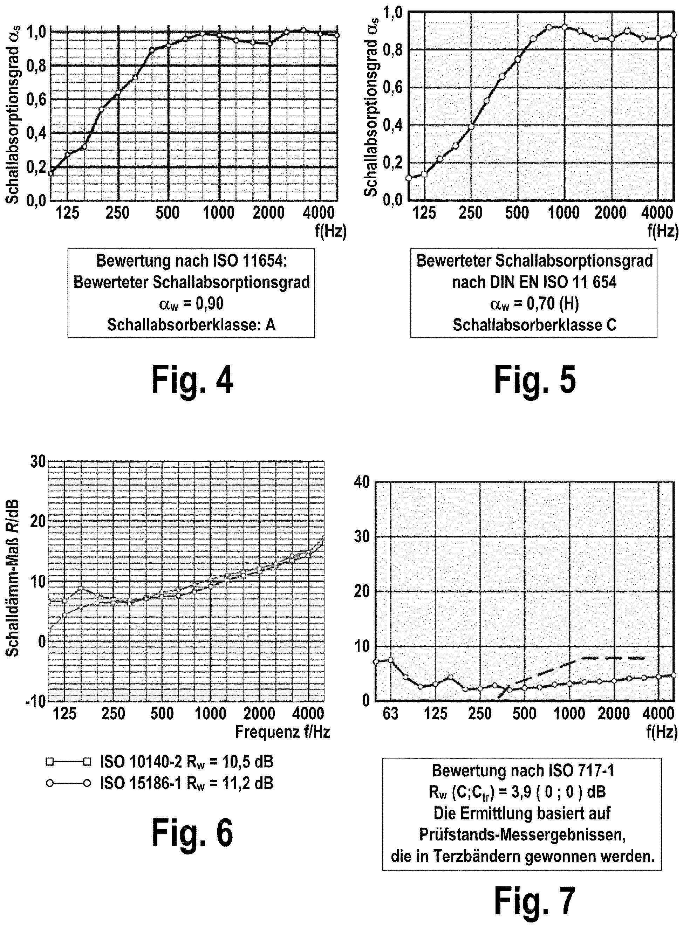

In den Fig. 4 bis 7 werden die akustischen Eigenschaften des Akustikpaneels der Fig. 1 und 2 mit dem Akustikpaneel der Fig. 3 verglichen.

In Fig. 4 ist der bewertete Schallabsorptionsgrad über der Frequenz in Hz gezeigt, bewertet nach IS011654, bei α_{w} = 0,90. Es ergibt sich eine Schallabsorberklasse von A.

Der Wert von 0,9 für α_{w} ist liegend mit Rahmen 100 mm Abstand gemessen.

Es ist zu erkennen, dass das Akustikpaneel 10 der Fig. 1 und 2 gemäß Fig. 4 einen deutlich höheren Schallabsorptionsgrad αₛ erreicht als das Akustikpaneel des Standes der Technik, das der Schallabsorberklasse C zuzuordnen ist.

In den Figuren 6 und 7 ist jeweils ein Schalldämm-Maß in Dezibel über der Frequenz F in Hertz aufgetragen. In beiden Fällen erfolgt die Messung nach der Messnorm ISO 10140-2. Die Bewertung in Form des Einzahlwertes (z.B. R_{w} (C:Ctr)= 10,5 (0; 1) dB) erfolgt jeweils nach der Norm ISO 717-1.

Das bewertete Schalldämm-Maß R_{w}, das maßgeblich für die Schirmwirkung ist, beträgt 10,5 dB bei dem Akustikpaneel der erfindungsgemäßen Art, welches ebenfalls zur Messung in Fig. 4 herangezogen wurde.

Für das Akustikpaneel des Standes der Technik gemäß Fig. 3 ergeben sich vergleichende Werte gemäß Fig. 7. Der Wert von R_{w} liegt hier bei 3,9.

Es ist erkennbar, dass das erfindungsgemäße Akustikpaneel deutlich verbesserte akustische Eigenschaften liefert, insbesondere ein gutes Verhältnis von Schirmwirkung und Schallabsorption.

## Patentansprüche

1. Akustikpaneel (10) zur Beeinflussung der Akustik in Innenräumen wie Büroräumen, wobei das Akustikpaneel (10) eine Mehrzahl von Schichten aufweist, eine Paneelfläche definiert und eine Paneeldicke (T1) hat, mit
- einer ersten Wabenschicht (12) aus einem Kunststoffmaterial, die aus einer Vielzahl von nicht-gefüllten Waben (13) zusammengesetzt ist und eine erste Wabendicke hat (T2),
- einer zweiten Wabenschicht (14) aus einem Kunststoffmaterial, die aus einer Vielzahl von nicht-gefüllten Waben (15) zusammengesetzt ist und eine zweite Wabendicke hat (T3),
- einer Mittelschicht (16), die zwischen der ersten Wabenschicht (12) und der zweiten Wabenschicht (14) angeordnet ist und eine Mittelschichtdicke (T4) hat,
- einer ersten Deckschicht (18), die auf einer der Mittelschicht (16) gegenüberliegenden Seite der ersten Wabenschicht (12) angeordnet ist und eine erste Deckschichtdicke (T5) hat, und
- einer zweiten Deckschicht (20), die auf einer der Mittelschicht (16) gegenüberliegenden Seite der zweiten Wabenschicht (14) angeordnet ist und eine zweite Deckschichtdicke (T6) hat,
wobei die erste und die zweite Wabendicke (T2, T3) identisch sind,
wobei die Mittelschichtdicke (T4), die erste Deckschichtdicke (T5) und die zweite Deckschichtdicke (T6) identisch sind,
wobei die Mittelschicht (16), die erste Deckschicht (18) und die zweite Deckschicht (20) jeweils eine Vliesschicht sind,
wobei ein Verhältnis der Mittelschichtdicke (T4) zu der ersten Wabendicke (T2) und ein Verhältnis der Mittelschichtdicke (T4) zu der zweiten Wabendicke (T3) jeweils in einem Bereich von 0,06 bis 0,09 liegen, und
wobei ein Verhältnis der ersten Deckschichtdicke (T5) zu der ersten Wabendicke (T2) und ein Verhältnis der ersten Deckschichtdicke (T5) zu der zweiten Wabendicke (T3) jeweils in einem Bereich von 0,06 bis 0,09 liegen.

2. Akustikpaneel nach Anspruch 1, wobei die erste und/oder die zweite Wabenschicht (12, 14) aus Wandelementen (26, 28) zusammengesetzt ist, die sich in Richtung der Paneeldicke (T1) erstrecken.

3. Akustikpaneel nach Anspruch 1 oder 2, wobei die erste Wabenschicht (12) zu der Mittelschicht (16) hin und/oder zu der ersten Deckschicht (18) hin offene Waben (13) aufweist.

4. Akustikpaneel nach einem der vorhergehenden Ansprüche, wobei die erste Wabenschicht zu der Mittelschicht hin und/oder zu der ersten Deckschicht hin eine durchgehende Deckplatte aufweist, die Waben der ersten Wabenschicht abdeckt.

5. Akustikpaneel nach einem der vorhergehenden Ansprüche, wobei die zweite Wabenschicht (14) zu der Mittelschicht (16) hin und/oder zu der zweiten Deckschicht (20) hin offene Waben (15) aufweist.

6. Akustikpaneel nach einem der Ansprüche 1 - 4, wobei die zweite Wabenschicht zu der Mittelschicht hin und/oder zu der zweiten Deckschicht hin eine durchgehende Deckplatte aufweist, die Waben der zweiten Wabenschicht abdeckt.

7. Akustikpaneel nach einem der vorhergehenden Ansprüche, wobei ein Verhältnis der zweiten Deckschichtdicke (T6) zu der zweiten Wabendicke (T3) und/oder ein Verhältnis der zweiten Deckschichtdicke (T6) zu der ersten Wabendicke (T2) in einem Bereich von 0,01 bis 0,3 liegt, insbesondere in einem Bereich von 0,03 bis 0,1, vorzugsweise in einem Bereich von 0,06 bis 0,09.

8. Akustikpaneel nach einem der vorhergehenden Ansprüche, wobei wenigstens eine Stirnseite des Akustikpaneels (10) eine Stirnseitenschicht (24) aufweist, die eine Stirnschichtdicke (T8) hat.

9. Akustikpaneel nach einem der vorhergehenden Ansprüche, wobei das Akustikpaneel (10) mit einem Stoffbezug (22) bezogen ist, der eine Bezugsdicke (T7) hat.

10. Akustikpaneel nach einem der vorhergehenden Ansprüche, wobei das Akustikpaneel (10) eine Paneeldicke (T1) in einem Bereich von 20 mm bis 40 mm hat und/oder wobei das Akustikpaneel (10) ein Flächengewicht in einem Bereich von 1,0 kg/m² bis 3,0 kg/m² hat, vorzugsweise in einem Bereich von 1,5 kg/m² bis 2,0 kg/m².

## Claims

1. Acoustic panel (10) for influencing the acoustics indoors such as offices, wherein the acoustic panel (10) comprises a plurality of layers, defines a panel area and has a panel thickness (T1), comprising
- a first honeycomb layer (12) from a plastics material, which is composed of a plurality of honeycombs (13) that are not filled and has a first honeycomb thickness (T2),
- a second honeycomb layer (14) from a plastics material, which is composed of a plurality of honeycombs (15) that are not filled and has a second honeycomb thickness (T3),
- a central layer (16), which is arranged between the first honeycomb layer (12) and the second honeycomb layer (14) and has a central layer thickness (T4),
- a first cover layer (18), which is arranged on a side of the first honeycomb layer (12) opposite to the central layer (16) and has a first cover layer thickness (T5), and
- a second cover layer (20) which is arranged on a side of the second honeycomb layer (14) opposite to the central layer (16) and has a second cover layer thickness (T6),
wherein the first and the second honeycomb thicknesses (T2, T3) are identical,
wherein the central layer thickness (T4), the first cover layer thickness (T5) and the second cover layer thickness (T6) are identical,
wherein the central layer (16), the first cover layer (18) and the second cover layer (20) are each a fleece layer,
wherein a ratio between the central layer thickness (T4) and the first honeycomb thickness (T2) and a ratio between the central layer thickness (T4) and the second honeycomb thickness (T3) is in each case in a range between 0.06 to 0.09, and
wherein a ratio between the first cover layer thickness (T5) and the first honeycomb thickness (T2) and a ratio between the first cover layer thickness (T5) and the second honeycomb thickness (T3) is in each case in a range between 0.06 and 0.09.

2. Acoustic panel according to claim 1, wherein the first and/or the second honeycomb layer(s) (12, 14) is/are composed of wall elements (26, 28) that extend in the direction of the panel thickness (T1).

3. Acoustic panel according to claim 1 or 2, wherein the first honeycomb layer (12) has honeycombs (13) that are open towards the central layer (16) and/or towards the first cover layer (18).

4. Acoustic panel according to any one of the preceding claims, wherein the first honeycomb layer has a cover plate that is continuous towards the central layer and/or towards the first cover layer and covers honeycombs of the first honeycomb layer.

5. Acoustic panel according to any one of the preceding claims, wherein the second honeycomb layer (14) has honeycombs (15) that are open towards the central layer (16) and/or towards the second cover layer (20).

6. Acoustic panel according to any one of the claims 1 to 4, wherein the second honeycomb layer has a cover plate that is continuous towards the central layer and/or towards the second cover layer and covers honeycombs of the second honeycomb layer.

7. Acoustic panel according to any one of the preceding claims, wherein a ratio between the second cover layer thickness (T6) and the second honeycomb thickness (T3) and/or a ratio between the second cover layer thickness (T6) and the first honeycomb thickness (T2) is in a range between 0.01 to 0.3, in particular in a range between 0.03 to 0.1, preferably in a range between 0.06 and 0.09.

8. Acoustic panel according to any one of the preceding claims, wherein at least one end face of the acoustic panel (10) comprises an end face layer (24) having an end face thickness (T8).

9. Acoustic panel according to any one of the preceding claims, wherein the acoustic panel (10) is covered with a fabric cover (22) that has a cover thickness (T7).

10. Acoustic panel according to any one of the preceding claims, wherein the acoustic panel (10) has a panel thickness (T1) in a range between 20mm and 40mm and/or wherein the acoustic panel (10) has a weight per unit area in a range between 1.0 kg/m² and 3.0 kg/m², preferably in a range between 1.5 kg/m² and 2.0 kg/m².

## Revendications

1. Panneau acoustique (10) conçu pour influencer l'acoustique dans des espaces intérieurs tels que des locaux de bureaux, lequel panneau acoustique (10) est muni d'une pluralité de couches, définit une surface et présente une épaisseur (T1), comprenant
- une première couche (12) à nids d'abeilles, constituée d'une matière plastique qui est composée d'une multiplicité d'alvéoles (13) non comblés, et dont les alvéoles présentent une première épaisseur (T2),
- une seconde couche (14) à nids d'abeilles, consistant en une matière plastique qui est composée d'une multiplicité d'alvéoles (15) non comblés, et dont les alvéoles présentent une seconde épaisseur (T3),
- une couche médiane (16) interposée entre ladite première couche (12) à nids d'abeilles et ladite seconde couche (14) à nids d'abeilles, et dotée d'une épaisseur (T4),
- une première couche de recouvrement (18), disposée sur un côté de ladite première couche (12) à nids d'abeilles qui est tourné à l'opposé de la couche médiane (16), et pourvue d'une première épaisseur (T5) de couche de recouvrement, et
- une seconde couche de recouvrement (20), implantée sur un côté de ladite seconde couche (14) à nids d'abeilles qui est orienté à l'opposé de ladite couche médiane (16), et dotée d'une seconde épaisseur (T6) de couche de recouvrement,
sachant que les première et seconde (T2, T3) épaisseurs des alvéoles sont identiques,
sachant que l'épaisseur (T4) de la couche médiane, la première épaisseur (T5) de couche de recouvrement et la seconde épaisseur (T6) de couche de recouvrement sont identiques, sachant que la couche médiane (16), la première couche de recouvrement (18) et la seconde couche de recouvrement (20) se présentent, à chaque fois, comme une couche de non-tissé,
sachant qu'un rapport entre l'épaisseur (T4) de la couche médiane et la première épaisseur (T2) des alvéoles, et un rapport entre ladite épaisseur (T4) de la couche médiane et la seconde épaisseur (T3) des alvéoles, sont respectivement situés dans une plage de 0,06 à 0,09, et
sachant qu'un rapport entre la première épaisseur (T5) de couche de recouvrement et ladite première épaisseur (T2) des alvéoles, et un rapport entre ladite première épaisseur (T5) de couche de recouvrement et ladite seconde épaisseur (T3) des alvéoles, sont respectivement situés dans une plage de 0,06 à 0,09.

2. Panneau acoustique selon la revendication 1, la première et/ou la seconde couche(s) (12, 14) à nids d'abeilles étant composée(s) d'éléments de paroi (26, 28) qui s'étendent dans la direction de l'épaisseur (T1) dudit panneau.

3. Panneau acoustique selon la revendication 1 ou 2, la première couche (12) à nids d'abeilles étant munie d'alvéoles (13) ouverts en direction de la couche médiane (16) et/ou en direction de la première couche de recouvrement (18).

4. Panneau acoustique selon l'une des revendications précédentes, la première couche à nids d'abeilles étant équipée, en direction de la couche médiane et/ou en direction de la première couche de recouvrement, d'une platine ininterrompue de recouvrement qui coiffe les alvéoles de ladite première couche à nids d'abeilles.

5. Panneau acoustique selon l'une des revendications précédentes, la seconde couche (14) à nids d'abeilles étant pourvue d'alvéoles (15) ouverts en direction de la couche médiane (16) et/ou en direction de la seconde couche de recouvrement (20).

6. Panneau acoustique selon l'une des revendications 1-4, la seconde couche à nids d'abeilles étant dotée, en direction de la couche médiane et/ou en direction de la seconde couche de recouvrement, d'une platine ininterrompue de recouvrement coiffant les alvéoles de ladite seconde couche à nids d'abeilles.

7. Panneau acoustique selon l'une des revendications précédentes, sachant qu'un rapport entre la seconde épaisseur (T6) de couche de recouvrement et la seconde épaisseur (T3) des alvéoles, et/ou un rapport entre ladite seconde épaisseur (T6) de couche de recouvrement et la première épaisseur (T2) des alvéoles, se situe(nt) respectivement dans une plage de 0,01 à 0,3,
notamment dans une plage de 0,03 à 0,1, préférentiellement dans une plage de 0,06 à 0,09.

8. Panneau acoustique selon l'une des revendications précédentes, au moins une face extrême dudit panneau acoustique (10) étant munie d'une couche (24) qui présente une épaisseur (T8) de couche extrême.

9. Panneau acoustique selon l'une des revendications précédentes, ledit panneau acoustique (10) étant revêtu d'une garniture (22) en tissu, qui présente une épaisseur (T7).

10. Panneau acoustique selon l'une des revendications précédentes, sachant que ledit panneau acoustique (10) présente une épaisseur (T1) située dans une plage de 20 mm à 40 mm, et/ou sachant que ledit panneau acoustique (10) présente une masse surfacique située dans une plage de 1,0 kg/m² à 3,0 kg/m², préférentiellement dans une plage de 1,5 kg/m² à 2,0 kg/m².
